# EUROPEAN PATENT APPLICATION

(11) **EP 1 746 293 A1**
(43) Date of publication of application: **24.01.2007**
(21) Application number: 05106649.6
(22) Date of filing: 20.07.2005
(51) Int. Cl.: F16B 13/08

(54) **Fixing device for hollow frames and plate surfaces**

(71) Applicant: Talpe, Joseph, 8581 Avelgem-Kerkhove (BE)
(72) Inventor: Talpe, Joseph, 8581 Avelgem-Kerkhove (BE)
(74) Representative: Leherte, Georges M.L.M.

(57) **Abstract**

The invention relates to a fixing device for hollow frames and plate surfaces, comprising an externally threaded bolt piece (3) and an internally threaded nut piece (5) provided to be inserted through a hole (6) in a hollow frame or plate surface, whereas an intermediate blocking means (4) prevents said nut piece (5) from rotating when screwing said bolt piece (3) into said nut piece (5), wherein said internally threaded nut piece (5) comprises expandable parts (12), and said intermediate blocking piece (4) is provided to cooperate to expand said expandable parts (12) when screwing said bolt piece (3).

## Description

The invention relates to a device / system for fixing objects, accessories, etc. to / onto hollow frames and plate surfaces.

Fixing objects, accessories, etc. to hollow frames and plate surfaces constitutes a well known problem. The use of mere screws, be it of "special types" does not provide sufficient strength to the fixing, whereas the use of "bolt and nut" systems involves the problem of putting in place the nut in the hollow frame or behind the plate surface.

Methods have been proposed, involving a bolt and "nut", based on the principle of a nut part (nut parts) designed to be inserted through a hole in the hollow frame or plate surface, whereas special means are provided to prevent the nut part(s) from rotating when screwing the bolt into the nut part. Methods based on this principle, such as for instance the fastening device disclosed in US patent 5.044.854, have several drawbacks (complexity of the parts, cost, ease of use) and are generally not very practical, so that these methods have not been much applied.

It is the purpose of this invention to provide a fixing device based on this actual principle, but which is practical and economic, provides strong fixation and requires no special tools.

To achieve this purpose the invention provides a fixing device for hollow frames and plate surfaces, comprising an externally threaded bolt piece and an internally threaded nut piece provided to be inserted through a hole in a hollow frame or plate surface, whereas blocking means are provided for preventing said nut piece from rotating when screwing said bolt piece into said nut piece, in which said blocking means comprise an intermediate piece, provided to be positioned between said bolt piece and said nut piece on the exterior side of said hole so as to be prevented from rotating when screwing said bolt piece and to prevent said nut piece to rotate when screwing said bolt piece, whereas said internally threaded nut piece comprises expandable parts, and said intermediate piece is provided to cooperate to expand said expandable parts when screwing said bolt piece.

The use of "intermediate" parts in "bolt and nut"-like devices, to participate in the blocking and/or expansion of the device, is known in itself, in the context of fixing devices designed to be anchored into bores in concrete material, in rock material, and the like (so called expansion screws). Such devices are for instance disclosed in patent documents GB 2.160.610, GB 2.383.829 and US 6.719.509. The concept and the realisation of such devices differs fundamentally from fixing devices for hollow frames and plate surfaces, according to this invention.

According to a preferred embodiment of the invention, said blocking means of the device consist of said intermediate piece, whereas the "outer side" shape of said intermediate pieces is provided to cooperate with the shape of accessories to be fixed to said hollow frame or plate surface, so as to prevent said blocking means from rotating, and whereas its "inner side" shape is provided to cooperate with said nut piece to prevent it from rotating.

The expressions "outer side" and "inner side" in respect of the intermediate piece refers respectively to that side of the intermediate piece that is directed away from (out of) the hole in the hollow frame / plate surface, and that side of the intermediate piece that is directed towards (in to) the hole in the hollow frame / plate surface.

According to preferred features of the invention, said intermediate piece of the device may comprise a portion with conical shape provided to expand said expandable parts on said nut piece when screwing said bolt piece, and/or rib portions provided to engage in slots between said expandable parts on said nut piece to prevent said nut piece from rotating when screwing said bolt piece.

In a further preferred embodiment of the invention, the nut part may consist of a cylinder with threaded bottom part, provided with longitudinal slits forming said expandable parts.
According to a preferred aspect of this embodiment, said slits forming said expandable parts constitute the slots referred to here above, cooperating with said ribs of said intermediate piece.

According to a further preferred feature of the invention, the intermediate piece is most suitably made of plastic material.

According to still another preferred feature of the invention, the intermediate piece may comprise an outer side portion substantially matching a recess in an accessory part intended to be fixed to / onto said hollow frame or plate surface by said fixing device.
Most preferably, the intermediate piece comprises a flat non circular "head" portion (i.e. on the outer side of the piece), cooperating with a corresponding (non circular) recess in an accessory part to be fixed on said hollow frame or plate surface. The shape of the head portion may for instance have a square configuration, or any other suitable flat, preferably "symmetric", configuration, like triangular, hexagonal or octagonal.

The invention also specifically relates to
an internally threaded nut piece for use in a fixing device according to the invention, which nut piece consists of a cylindrical nut piece comprising expandable parts separated by slits / slots, suitable to cooperate with an intermediate part of said fixing device, when screwing the bolt piece of said fixing device, in order to prevent the nut piece from rotating and in order to expand said expandable parts,
as well as to
blocking means for use in a fixing device according to the invention, which blocking means comprises an inner side portion with conical shape and with rib portions, suitable to cooperate with a nut piece of said fixing device, when screwing the bolt piece of said fixing device, in order to prevent said nut piece from rotating and in order to expand expandable parts on said nut piece, whereas the outer side portion of said blocking means comprises a non circular shape fitting into a recess on accessories to be fixed to a hollow frame or plate surface by means of said fixing device, so as to prevent said blocking means from rotating when screwing the bolt piece of said fixing device.

The improved nut and bolt fixing technique according to this invention is useful for fixing objects on hollow surfaces, where there is no possibility to reach behind to position the nut on the bolt.
This new technique is thus particularly advantageous for fixing objects to frame / shaft profiles, as used for instance for door frames, door posts, ground posts or poles, etc., or to plate surfaces, as for instance body parts of vehicles.
The main advantages of the technique / system according to the invention are :
- only one bore / hole has to be made for each fixation
- suitable for different wall thicknesses
- very simple (cheap) execution
- very strong / resistant fixation
- no need for special tools
- can be disassembled / re-used

The system uses standard bolts, together with a special but simple nut piece (referred to as the "expander") and a simple and cheap (plastic) intermediate piece (referred to as the "splitter").

The bolt is introduced through the object to be fixed on the hollow surface, whereas on the backside of this object a non circular (square) recess is provided (on the object itself or on an intermediate accessory piece).
The bolt is then introduced through the intermediate piece (splitter) and screwed into the nut piece (expander) having a generally cylindrical shape, suited to pass through a conventional bore corresponding to the standard bolt used in the system.
This assembly is then introduced in the hole in the hollow surface (for instance a hollow frame or a plate surface). By tightening the bolt the expander is pushed open onto a conical part of the splitter.
The slits in the expander, in particular four saw-cuts in this cylindrical nut piece, allow on the one hand that the expander opens and on the other hand that the expander does not rotate together with the bolt (as the four ribs on the splitter prevent such rotation)
The non circular head of the splitter is retained by a corresponding non circular recess provided on or in each object to be fixed using the system according to the invention, so that also the splitter is prevented from rotating together with the bolt.
The external diameter of the expander thus increases when tightening the bolt and fixes itself against the inner surface of the hollow frame or plate.

The invention will now be described in more detail, in a non limiting way, having reference to the accompanying drawings, in which
Figures 1 and 2 are perspective views illustrating the use of a device according to the invention for fixing an object to a hollow frame, Figure 1A showing a detail view of the fixing device and Figure 2 showing an exploded view of the assembly of Figure 1;
Figures 3A and 3B are perspective top and bottom views of a possible embodiment for an intermediate piece according to the invention having a square head on the "outer side" and a conical shape with side ribs on the "inner side";
Figure 4A and 4B are perspective top and bottom views of a possible embodiment for an expandable threaded nut piece according to the invention;
Figure 5 is a perspective view of the back of an object to be fixed, with recesses for cooperation with the fixing device according to the invention.

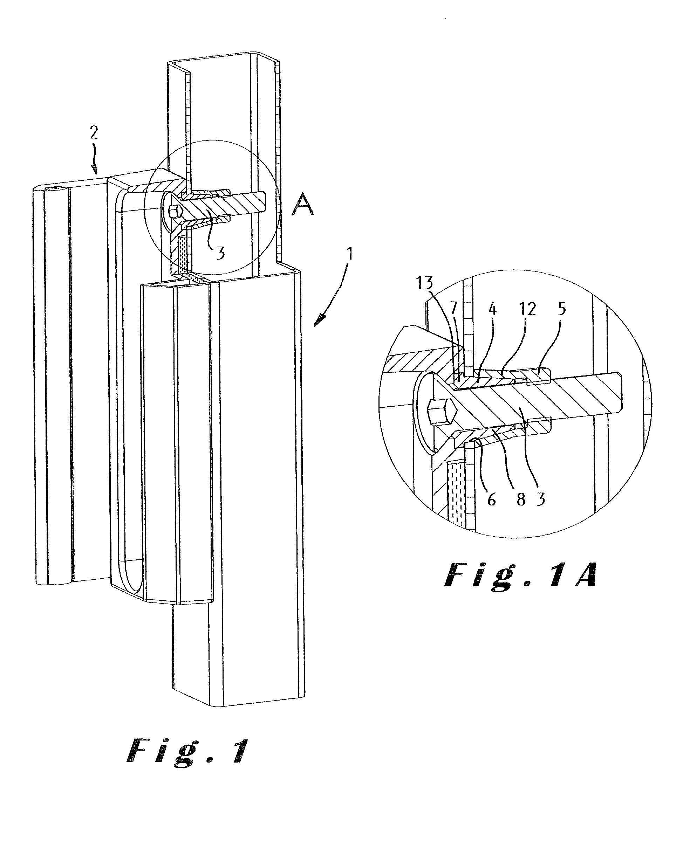

Figure 1 shows a hollow frame, designated as a whole by reference numeral 1, onto which is fixed an "object" (which, in the non limiting example represented in the drawing, consists of a plastic handle), designated as a whole by reference numeral 2, by means of a fixing device according to the invention (shown in detail in Figure 1A), comprising a standard externally threaded bolt 3, a blocking intermediate piece 4 ("splitter"), and an internally threaded nut piece 5 (expander).

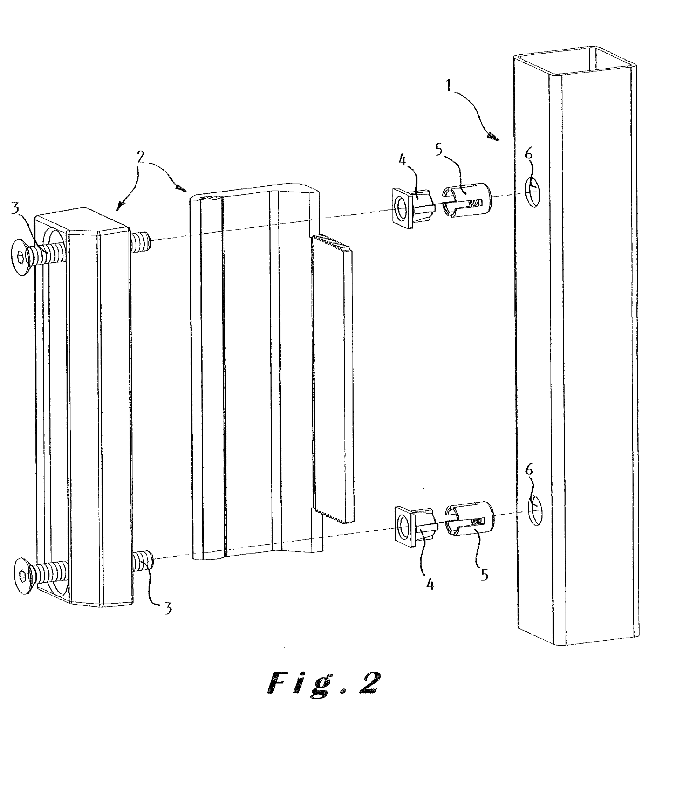

Figure 2 shows an exploded view of the assembly of figure 1.
The threading of the bolt 3 and the nut piece 5 is not shown in the schematic representation of figure 1, but is visible in the exploded view of figure 2.

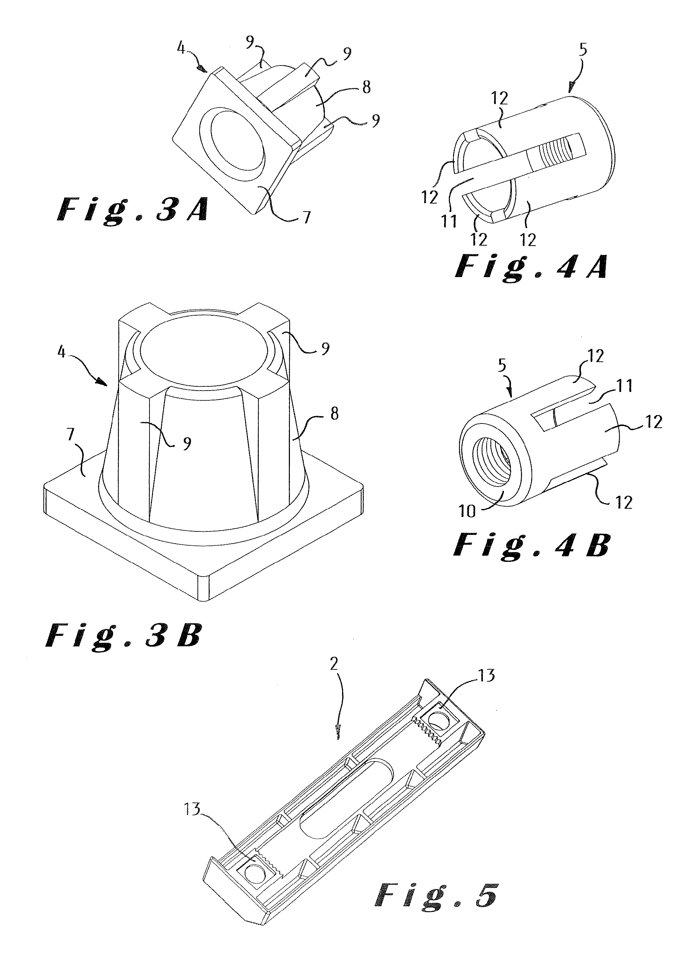

The blocking piece 4 (splitter) and the nut piece 5 (expander) are shown in more detail in figures 3A and 3B and in figures 4A and 4B respectively.
The splitter 4 comprises on its outer side a non circular (square) head 7, and on its inner side a conical portion 8 provided with ribs 9.
The expander 5 globally consists of a hollow cylinder comprising a threaded bottom part 10, with four saw-cuts 11 (slits / slots) realizing the expandable parts 12 of the expander.

For fixing the object 2 to the frame 1, the bolts 3 are first introduced through the object 2, and then assembled with the splitters 4 and the expanders 5; the square head 7 of the splitter thereby fits into a square recess 13 (shown in figure 5) of (a part) of the object 2.
The assembly of the object 2 with bolts 3, splitters 4 and expanders 5 is then introduced through the holes 6 in the frame 1.
As may be readily perceived from figure 1A, when tightening / screwing bolts 3 the head 7 of splitter 4 will be retained by the recess 13 of (part of) object 2, and prevented from rotating together with the bolt 3; as a consequence the ribs 9 on the conical portion 8 of the splitter 4, fitted in the slits 11 of the expander 5, will prevent the expander 5 to rotate together with the bolt 3; when tightening / screwing the bolts 3 expander 5 will be pushed on the conical part 12 of the splitter and cause the expander parts 12 to expand and ultimately tightly fix themselves against the inner surface of the hollow frame.

## Claims

1. Fixing device for hollow frames and plate surfaces, comprising an externally threaded bolt piece (3) and an internally threaded nut piece (5) provided to be inserted through a hole in a hollow frame or plate surface, whereas blocking means (4) are provided for preventing said nut piece (5) from rotating when screwing said bolt piece (3) into said nut piece, **characterised in that** said blocking means (4) comprise an intermediate piece (7, 8, 9), provided to be positioned between said bolt piece (3) and said nut piece (5) on the exterior side of said hole so as to be prevented from rotating when screwing said bolt piece (3) and to prevent said nut piece (5) to rotate when screwing said bolt piece (3), whereas said internally threaded nut piece (5) comprises expandable parts (12), and said intermediate piece (7, 8, 9) is provided to cooperate to expand said expandable parts (12) when screwing said bolt piece (3).

2. Device according to claim 1, **characterised in that** said blocking means (4) consist of said intermediate piece (7, 8, 9) having an outer side shape (7) provided to cooperate with the shape of accessories to be fixed to said hollow frame or plate surface, so as to prevent said blocking means (4) from rotating, and having an inner side shape (9) provided to cooperate with said nut piece (5) to prevent it from rotating.

3. Device according to any one of the preceding claims, **characterised in that** said intermediate piece (7, 8, 9) comprises a portion (8) with conical shape provided to expand said expandable parts (12) on said nut piece (5) when screwing said bolt piece (3).

4. Device according to any one of the preceding claims, **characterised in that** said intermediate piece (7, 8, 9) comprises rib portions (9) provided to engage in slots (11) between said expandable parts (12) on said nut piece (5) to prevent said nut piece (5) from rotating when screwing said bolt piece (3).

5. Device according to any one of the preceding claims, **characterised in that** said nut piece (5) consists of a cylinder with threaded bottom part (10), provided with longitudinal slits (11) forming said expandable parts (12).

6. Device according to any one of claims 4 and 5, **characterised in that** said slits (11) forming said expandable parts (12) constitute said slots (11) cooperating with said ribs (9) of said intermediate piece (7, 8,9).

7. Device according to any one of the preceding claims, **characterised in that** said intermediate piece (7, 8, 9) is made of plastic material.

8. Device according to any one of the preceding claims, **characterised in that** said intermediate piece (7, 8, 9) comprises an outer side portion (7) matching a recess (13) in an accessory part to be fixed on said hollow frame or plate surface.

9. Device according to any one of the preceding claims, **characterised in that** said intermediate piece (7, 8, 9) comprises a flat non circular head portion (7), cooperating with a corresponding non circular recess (13) in an accessory part to be fixed on said hollow frame or plate surface.

10. Internally threaded nut piece (5) for use in a fixing device according to any one of the preceding claims, **characterised in that** said nut piece (5) consists of a cylindrical nut piece comprising expandable parts (12) separated by slits / slots (11), suitable to cooperate with an intermediate piece (7, 8, 9) of said fixing device, when screwing the bolt piece (3) of said fixing device, in order to prevent the nut piece (5) from rotating and in order to expand said expandable parts (12).

11. Blocking means (4) for use in a fixing device according to any one of claims 1 - 9, **characterised in that** said blocking means (4) comprises an inner side portion with conical shape (8) and with rib portions (9), suitable to cooperate with a nut piece (5) of said fixing device, when screwing the bolt piece (3) of said fixing device, in order to prevent said nut piece (5) from rotating and in order to expand expandable parts (12) on said nut piece (5), whereas the outer side portion of said blocking means (4) comprise a non circular shape (7) fitting into a recess on accessories to be fixed to a hollow frame or plate surface by means of said fixing device, so as to prevent said blocking means (4) from rotating when screwing the bolt piece (3) of said fixing device.
